Europäisches Patentamt

European Patent Office

Office européen des brevets

(19)

(11) Publication number: **0 198 284**
A2

(12) # EUROPEAN PATENT APPLICATION

(21) Application number: **86104127.5**

(22) Date of filing: **25.03.86**

(51) Int. Cl.⁴: **B 62 K 3/02,** B 62 K 19/30

(30) Priority: **16.04.85 IT 2035585**

(71) Applicant: **FIR S.p.A. FABBRICA ITALIANA RUOTE, Via B. Colleoni, 6, I-24040 Boltiere Bergamo (IT)**

(43) Date of publication of application: **22.10.86 Bulletin 86/43**

(72) Inventor: **Arrigoni, Giovanni, Via Monte Grappa, 39, I-24040 Boltiere (Bergamo) (IT)**

(74) Representative: **Luksch, Giorgio, Dr.-Ing. et al, Ing. A. Giambrocono & C. S.r.l. Via Rosolino Pilo, 19/b, I-20129 Milano (IT)**

(84) Designated Contracting States: **BE DE FR GB LU NL**

(54) **Bicycle frame in particular of the type used for sports competitions.**

(57) The bicycle frame according to the present invention is of the type used for sports competitions and is characterized in that it consists of a laminar structure presenting a first, a second and a third lobe inside of which mechanical means for the locking of the saddle, the crank axle, the steering as well as the wheels are let in.

Description:

The present invention relates to a bicycle frame, in particular of the type used for sports competitions.

The existing competition bicycle frames substantially consist
of a series of tubes meeting at the points where the saddle,
the crank axle, the steering and the wheels are fixed.

Those frames, although performing on the whole the aims they
set themselves, result to be little endowed from an aerodynamic
point of view, thus penalizing the athlete's efforts.

The aerodynamic penetration results unfavourable for two distinct
reasons:
a) the high formation of whirlwinds around the frame forming
tubes; and
b) from the position assumed by the athlete.
In the first case it was tried to attenuate the negative phenomena by suitably shaping the tubes, but the results ontained
were rather modest.

In the second case it was tried to make the athlete bend down
as much as possible by lowering the handlebars. For doing this
it was necessary to reduce the steering barrel height dimensions in so far as the tubes meeting in the same allow it, which
in the existing frames are practically joined in a single point.

This determines the loss of rigidity and solidity of the frame
since the connection steering barrel- frame tubes, originally
assimilable to a perfect fixed joint, transformed into a hinge.

At present, during the production of a same type of frame, it is necessary to prepare in advance more than one equipment able to produce the same frame in different sizes according to the build of the athlete.

Practically, for every centimeter of variation in the sizes of the athlete (usually calculated on the basis of the height of the same), it is necessary to provide a different frame.

From the aforesaid the standardization difficulty in the production of the existing competition bicycle frames is obvious.

The purpose of the present invention is to provide a frame having remarkable streamline, solidity and versatility qualities.

This and other aims of the invention will be apparent to those skilled in the art on perusing the following description and claims.

Bicycle frame, in particular of the type used for sports competitions, characterized in that it consists of three lobe laminar structure inside of which means for the fixing of the saddle, the crank shaft, the steering and the wheels are let in.

The invention is ullustrated by way of a non- limitative amplification in the figures of the annexed sheets of drawing, wherein:

Fig. 1 is a right-hand side view of the frame according to the invention, provided with cutaways in place.
Fig. 2 is a left-hand side view;
Fig. 3 is a view of the locking and height regulation device of the saddle; and

Fig. 4 is a perspective view of a bicycle provided with the frame according to the invention.

With reference to the above-mentioned figures, the frame according to the invention, generally shown at 1, consists of a laminar structure showing a first lobe 2, a second lobe 3 and a third lobe 4.

The first lobe is formed by the substantially bent development of an ellipsoidal section and at the end of which a steering barrel 14, at lowered height, is let in, partially incorporating the steering set thus increasing the resistant section of the steering barrel.

The lobe 3 shows an airplane wing shaped section and develops first slightly sloping towards the rear part of the bicycle and successively with less inclination creating a length 5 inside of which are placed means 6 for the locking of the saddle that will be described in the following.

The lower lobe 4 is of greater dimensions with respect to the preceding ones and is partially divided in two semilobes 7 and 8, respectively right and left, defining together a housing 9 for the rear wheel 10 of the vehicle constraint to thesame by means of little brackets 11 let in the structure of the two semilobes.

At the lower jointing zone of the semilobes 7 and 8 a bush 12 for the support of central mouvement 15 is housed. Said bush has a spline apt to allow the minimum center distance between wheel pin and pedal mouvement pin.

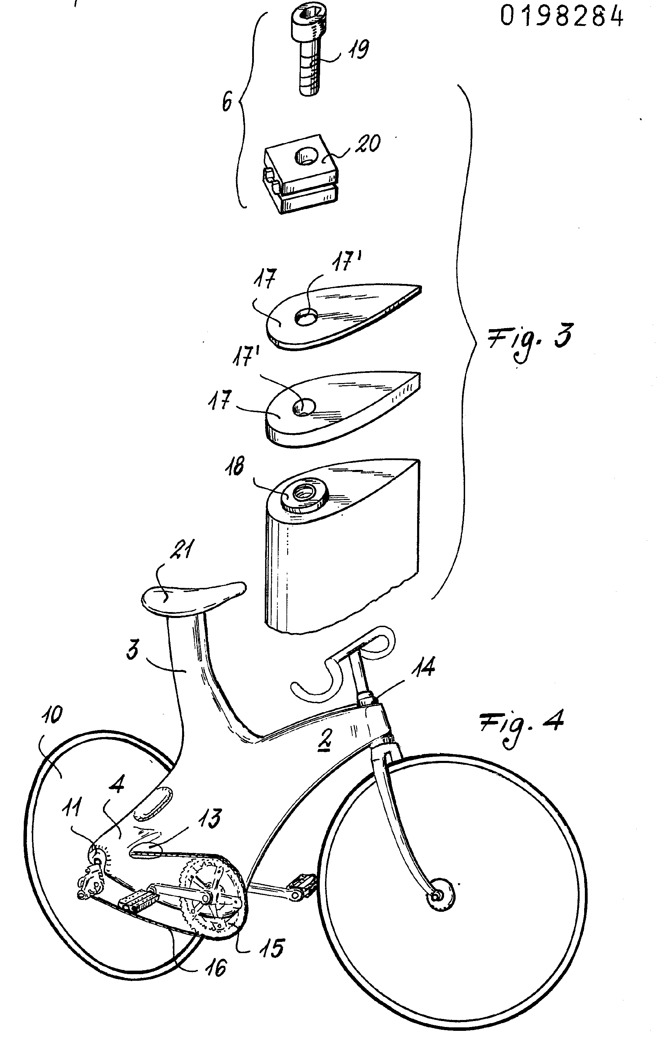

The semilobe 7 shows a streamline slit 13 through which the transmissione chain 16 is being inserted. With particular reference to figure 3, the end part 5 of lobe 3 initially shows an indefinite length which is reducible through resection dependant upon the athlete's size.

The micrometric variations of part 5 are obtained  adding shims 17 of suitable height.

In the part 5 a threaded bush 18,destined to cooperate with a screw 19 conventionally engaging a block 20 for the locking of the saddle 21,is let in.

The shims 17 show holes 17' for the passage of the screw 19.

The rear brake is housed in a suitable shaping in the lobes 7 and  8 such as to form a streamline covering for the brake.

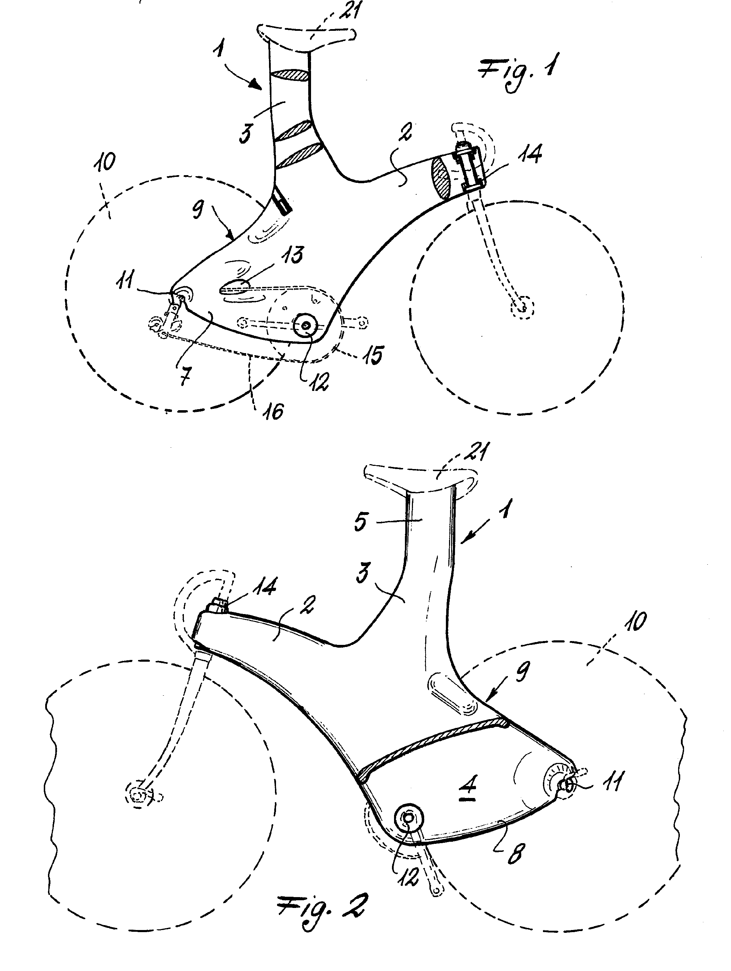

As it can be seen in figure 1 the shapes of the lobe sections are shown  in place.

Claims:

1. A bycicle frame in particular of the type used for sports competitions, characterized in that it consists of a laminar structure presenting a first, a second and a third lobe inside of which mechanical means for the locking of the saddle, the crank axle, the steering as well as the wheels are let in.

2. A frame according to the preceding claim, characterized in that said laminar three-lobe structure is formed by two specularly identical semilobes, connected at the vehicle axis of symmetry, except for a part of the third lobe which is devided in two so as to create a space for housing the rear wheel and the relevant braking means.

3. A frame according to the preceding claims, characterized in that at the end of the first lobe the mechanical steering groups are let in, at the end of the second lobe the mechanical saddle supports are let in and at the ends of the third lobe the crank axle and the support means of the rear wheel are let in.

4. A frame according to the preceding claims, characterized in that the third lobe is divided in two elements and carries at their ends little brackets for the support of the rear wheel.

5. A frame according to the preceding claims, characterized in that the saddle locking means are contained in the second lobe.

6. A frame according to the preceding claims, characterized in that the end part (5) of the second lobe (3) initially shows an indefinite length and is sectionable depending on the build of the athlete, in said aprt being let in a threaded bush (18) for the engagement with the locking means (6) of the saddle(21).

0198284

7. A frame according to the preceding claims, characterized in that the micrometric height regulation of the second lobe (3) is obtained by means of gauged shims (17).

8. A frame according to the preceding claims, characterized in that it shows a lowered steering barrel partially comprising the steering group.

9. A frame according to the preceding claims, characterized in that it shows the crank axle bush with a spine apt to allow the minimum relative distance between wheel axis and pedal axis.

10. A frame according to the preceding claims , characterized in that it has the rear brake inside the structure itself.

1/2

0198284

Fig. 1

Fig. 2

0198284

19

6

20

17  17'

17'

17

18

*Fig. 3*

21

3

10

4

11

13

2

14

15

16

*Fig. 4*